# EUROPÄISCHE PATENTSCHRIFT

(11) **EP 2 636 506 B1**
(45) Veröffentlichungstag und Bekanntmachung des Hinweises auf die Patenterteilung: **05.11.2014**
(21) Anmeldenummer: 13158595.2
(22) Anmeldetag: 11.03.2013
(51) Int. Cl.: B29C 49/36, B29C 49/78

(54) **Blasformmaschine mit Aufarbeitungseinrichtung für die Blasluftverteilung**
Blow-moulding machine with processing device for the distribution of blowing air
Machine de formage par soufflage dotée d'un dispositif de régénération pour la distribution de l'air de soufflage

(30) Priorität: 09.03.2012 DE 102012101981
(43) Veröffentlichungstag der Anmeldung: 11.09.2013
(73) Patentinhaber: Krones AG, 93073 Neutraubling (DE)
(72) Erfinder: Höllriegl, Thomas, 93073 Neutraubling (DE); Brunner, Andreas, 93073 Neutraubling (DE); Effenberger, Harald, 93073 Neutraubling (DE)
(74) Vertreter: Hannke, Christian

(56) Entgegenhaltungen:
- EP-B1- 1 789 248
- DE-U1-202004 018 237
- DE-U1-202005 020 967
- US-A1- 2004 173 949

## Beschreibung

Die vorliegende Erfindung bezieht sich auf eine Vorrichtung zum Umformen von Kunststoffvorformlingen zu Kunststoffbehältnissen. Derartige Vorrichtungen sind aus dem Stand der Technik seit langem bekannt. Dabei weisen derartige Vorrichtungen, im Folgenden auch als Blasformmaschinen bezeichnet, üblicherweise eine Vielzahl von Umformungsstationen auf, die erwärmten Kunststoffvorformlingen ein gasförmiges Medium und insbesondere Druckluft zuführen, um diese Kunststoffvorformlinge durch Innendruck zu expandieren. Üblicherweise wird diese Druckluft dabei von einem stationären Kompressor oder dergleichen zur Verfügung gestellt und anschließend je nach Bedarf auf die einzelnen Umformungsstationen, die üblicherweise an einen beweglichen und/oder drehbaren Träger angeordnet sind, zugeführt.

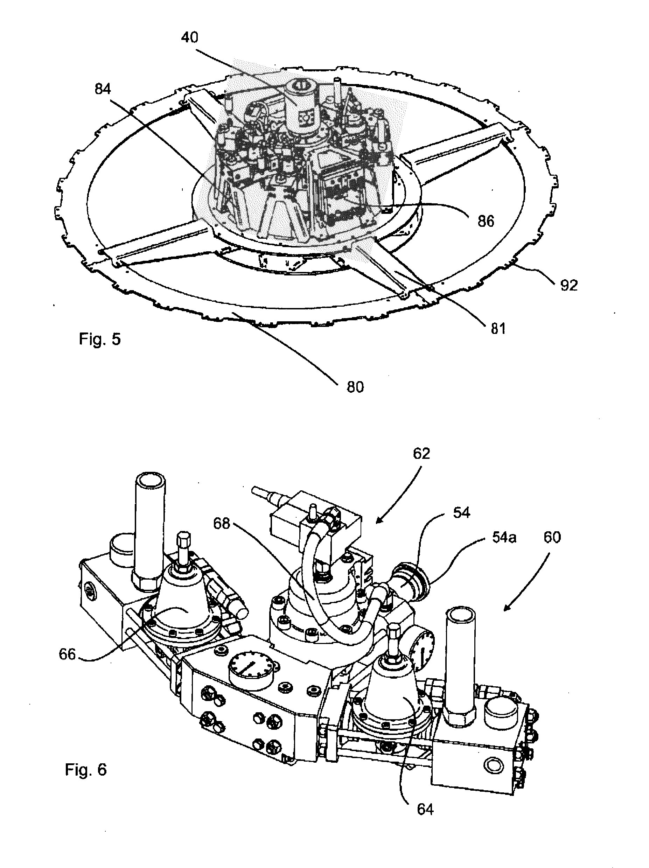

Die Druckschrift DE 20 2005 020 967 U1 (D1) offenbart eine Streckblasmaschine zum Umformen von Behältnissen bei der zwei Systeme zur Gasversorgung vorgesehen sind. Eine Niederdruckversorgung dient der Bereitstellung eines ersten Blasdruckes und eine Hochdruckversorgung zur Bereitstellung eines zweiten, höheren Blasdruckes, wobei Abgase des zweiten Gasdrucks zur Blasluftrückführung in die Niederdruckversorgung verwendet werden. Ein Kompressor zur Erzeugung des Drucks ist im stationären Bereich der Streckblasmaschine angeordnet, wohingegen die als Druckluftreservoirs dienenden Kessel 42 und 43 im beweglichen Teil 57 der Streckblasmaschine angeordnet sind. Die Druckwandler 41 und 61 können sowohl im stationären (Fig. 5) als auch im beweglichen Teil 57 der Streckblasmaschine (Fig. 6) angeordnet sein. Abgase aus dem Blasprozess können in ein System zur Arbeitsluftversorgung eingespeist werden, dass gegenüber dem ersten Blasdruck (Niederdruck) einen nochmals reduzierten Druck aufweist.

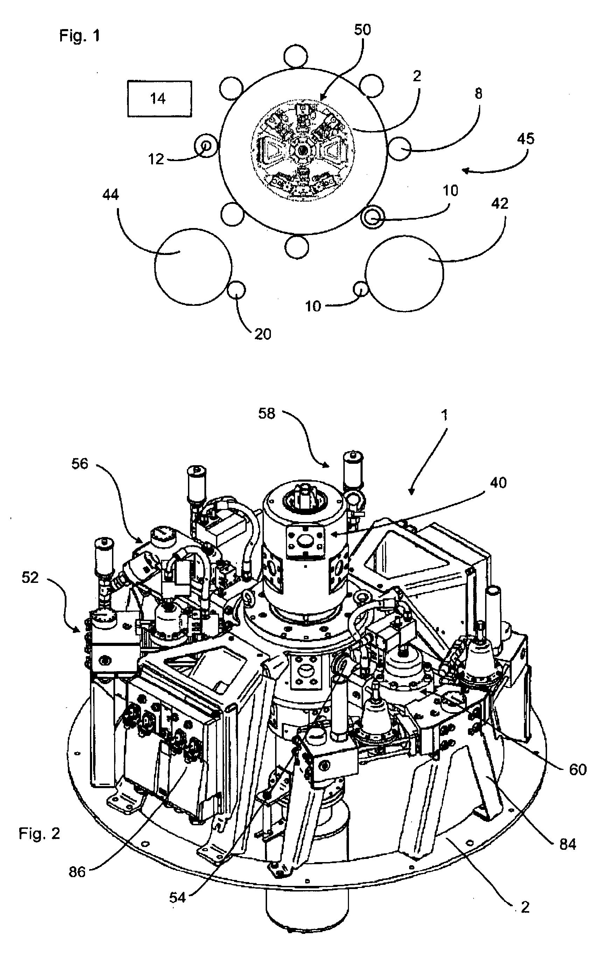

Gegenstand der Druckschrift US 2004/173 949 A1 ist eine Streckblasmaschine, bei der Abgase aus dem Blasprozess rückgewonnen werden können. Die Streckblasmaschine arbeitet mit mindestens zwei verschiedenen Drücken, wovon der geringere beispielsweise zum Vorblasen verwendet wird. Wie aus Figur 1 und der entsprechenden Beschreibung in Absatz [0041] hervorgeht, werden Abgase durch das Ventil 5 in ein Reservoir 6 geleitet von wo aus es beispielsweise zum Vorblasen genutzt werden kann. Außerdem ist in Absatz [0044] erwähnt, dass das Abgas aus dem Blasprozess auch zur Steuerung mechanischer Einrichtungen wie beispielsweise der Reckstangen genutzt werden kann.

Druckschrift EP 1 789 248 B1 nimmt wie auch die D1 die die Priorität der Anmeldung DE 10 2004 044 260 in Anspruch und weist daher Parallelen zu dem Gegenstand der D1 auf. Insbesondere unterscheidet sie sich jedoch von den Gegenstand der D1 darin, dass das Abgas aus dem Umformungsprozess nicht direkt in das Reservoir zur Bereitstellung des geringeren Blasdrucks geführt wird, sondern zunächst in ein weiteres Reservoir 67 eingeleitet wird, in dem ein über dem geringeren Blasdruck liegender Gasdruck aufrechterhalten wird. Von diesem Reservoir 67 kann Gas mittels entsprechender Druckwandler sowohl dem auf dem Blasrad angeordnetem Reservoir für den geringeren Glasdruck als auch der mit nochmals verringerten Druck betriebenen stationären Arbeitsgasversorgung zugeführt werden.

Dabei ist es nach dem Stand der Technik üblich, dass die Druckluft von einer Druckluftquelle aus dem stationären Maschinenabschnitt über eine Verteileinrichtung in den drehenden Maschinenabschnitt (Blaskarussell) geleitet wird. Im drehenden Maschinenabschnitt wird die Druckluft von der Verteileinrichtung durch Schlauchverbindungen zu einer Vielzahl von Druckreduzierungseinrichtungen geleitet und nach der Druckreduzierung auf unterschiedliche Druckniveaus über Ringleitungen den Umformungsstationen zugeführt. Diese Druckreduzierungseinrichtungen benötigen zusammen mit den Schlauchverbindungen von der Verteileinrichtung im drehenden Maschinenabschnitt sehr viel Bauraum. Eine kompakte Anordnung beispielsweise für kleinere Maschinen ist so schwer zu realisieren. Weiterhin führen diese besagten Schlauchverbindungen zwischen Verteileinrichtung und Druckreduzierungseinrichtungen zu Leistungs- bzw. Druckverlusten. Eine Druckreduzierung außerhalb der Konsole (z.B. Luftwand) und anschließendes Zuführen durch den Drehverteiler ist Stand der Technik.

Der vorliegenden Erfindung liegt daher die Aufgabe zu Grunde, eine Vorrichtung zur Verfügung zu stellen, welche einerseits mit einem verminderten Bauraum auskommt und bei der andererseits möglichst die besagten Leistungs- bzw. Druckverluste vermindert werden. Dies wird erfindungsgemäß durch eine Vorrichtung nach Anspruch 1 erreicht. Vorteilhafte Ausführungsformen und Weiterbildungen sind Gegenstand der Unteransprüche.

Eine erfindungsgemäße Vorrichtung zum Umformen von Kunststoffvorformlingen zu Kunststoffbehältnissen weist einen drehbaren Träger auf, an dem eine Vielzahl von Umformungsstationen zum Umformen der Kunststoffvorformlinge zu den Kunststoffbehältnissen angeordnet ist. Dabei weist jede Umformungsstation eine Druckbeaufschlagungseinrichtung auf, um die Kunststoffvorformlinge durch Beaufschlagung mit einem gasförmigen Medium zu Kunststoffbehältnissen umzuformen. Weiterhin ist eine insbesondere stationär angeordnete Bevorratungseinrichtung zum Bevorraten des gasförmigen Mediums vorgesehen und eine zumindest teilweise an dem Träger angeordnete Verteileinrichtung, welche das gasförmige Medium auf die einzelnen Druckreduzierungseinrichtungen verteilt. Weiterhin weist die Vorrichtung eine Aufbereitungseinrichtung auf, welche eine Beaufschlagung der Kunststoffvorformlinge mit wenigstens zwei unterschiedlichen Druckniveaus ermöglicht. Weiterhin weist die Aufbereitungseinrichtung wenigstens eine Druckreduzierungseinrichtung zur Reduzierung des von der Verteileinrichtung zur Verfügung gestellten Drucks des gasförmigen Mediums auf. Diese Druckreduzierungseinrichtung steht über eine Verbindungsleitung zumindest mittelbar und bevorzugt unmittelbar mit der Verteileinrichtung zur Leitung des gasförmigen Mediums in Strömungsverbindung.

Erfindungsgemäß ist dabei die wenigstens eine Druckreduzierungseinrichtung benachbart zu der Verteileinrichtung angeordnet. Unter der benachbarten Anordnung wird insbesondere verstanden, dass zwischen der Verteileinrichtung und der Druckreduzierungseinrichtung kein weiteres Bauteil angeordnet ist.

Durch die hier beschriebene Vorgehensweise wird eine sehr klein bauende Ausgestaltung der Umformungseinrichtung erreicht. Vorteilhaft ist die Verbindungsleitung zwischen der Druckreduzierungseinrichtung und der Verteileinrichtung kleiner als 40 cm, bevorzugt kleiner als 30 cm, bevorzugt kleiner als 20 cm und besonders bevorzugt kleiner als 10 cm. Es wäre dabei vorteilhaft möglich, dass lediglich eine sehr kurze Flanschverbindung zwischen der Druckreduzierungseinrichtung und der Verteileinrichtung besteht. Diese Flanschverbindung würde hier die oben erwähnte Verbindungsleitung darstellen. Der drehbare Träger ist damit auch eine Transporteinrichtung zum Transportieren der Umformungsstationen und/oder der darin angeordneten Kunststoffvorformlinge, wobei die Bewegung sowie das Tragen der Vorrichtung durch die Umformungsstationen ermöglicht wird. Die einzelnen Umformungsstationen weisen bevorzugt jeweils auseinander klappbare Blasformen auf, in deren Inneren die Kunststoffbehältnisse mit dem gasförmigen Medium und insbesondere mit Blasluft beaufschlagt werden.

Vorteilhaft ist die Druckreduzierungseinrichtung geeignet, um wenigstens 2, bevorzugt wenigstens 3 unterschiedliche Drücke zur Verfügung zu stellen.

Bei einer weiteren vorteilhaften Ausführungsform weist die Umformungseinrichtung weniger als 40 Umformungsstationen, bevorzugt weniger als 35 Umformungsstationen, bevorzugt weniger als 30 Umformungsstationen auf.

Bei einer weiteren vorteilhaften Ausführungsform weist die Vorrichtung Verteilkanäle, beispielsweise Ringleitungen, auf, welche das gasförmige Medium halten. Diese Verteilkanäle stehen dabei vorzugsweise in Strömungsverbindung mit den einzelnen Druckreduzierungseinrichtungen und versorgen andererseits die Umformungsstationen.

Bei einer weiteren vorteilhaften Ausführungsform ist eine Vielzahl von Druckreduzierungseinrichtungen in Umfangsrichtung um die Verteileinrichtung angeordnet. Vorteilhaft steht jede dieser Druckreduzierungseinrichtungen über je eine Verbindungsleitung in Strömungsverbindung mit der Verteileinrichtung. Auch sind bevorzugt die einzelnen Druckreduzierungseinrichtungen jeweils benachbart zu der Verteileinrichtung angeordnet.

Diese neugestaltete Aufbereitungseinheit minimiert auf diese Weise Leistungs- oder Druckverluste, die beim Einspeisen durch Schlauchleitungen nach dem Stand der Technik entstehen. Der Aufbau dieser Aufbereitungseinheit ist sehr kompakt und die Druckreduzierungseinrichtungen sind damit direkt an der Verteileinrichtung, beispielsweise einem Drehverteiler, angeordnet. So ist es möglich, dass die Druckreduzierungseinrichtungen gleichmäßig in Umfangsrichtung um den Drehverteiler angeordnet sind, um auf diese Weise beispielsweise eine optimierte Gewichtsverteilung herzustellen bzw. um Unwuchten zu vermeiden.

Vorteilhaft sind mehrere Druckreduzierungseinrichtungen sternförmig um die Verteileinrichtung angeordnet.

Vorteilhaft ist wenigstens eine Verbindungsleitung eine starre Verbindungsleitung. Wie oben erwähnt kann dabei eine Flanschverbindung zwischen der Verteileinrichtung und der Druckreduzierungseinrichtung bestehen. Durch die Verwendung einer starren Verbindungsleitung können Leistungs- bzw. Druckverluste noch besser vermieden werden.

Bei einer weiteren vorteilhaften Ausführungsform ist wenigstens eine Verbindungsleitung über eine Steckverbindung mit der Druckreduzierungseinrichtung verbunden. So ist es beispielsweise möglich, dass ein Stecknippel vorgesehen ist, der einfach in eine Druckreduzierungseinrichtung eingesteckt werden kann. Dabei ist es möglich, dass diese Steckverbindungen nur mit einem Drahtbügel und einem Sicherungsblech gesichert werden bzw. andere formschlüssige Bauteile vorgesehen sind.

Bei einer weiteren vorteilhaften Ausführungsform ist die wenigstens eine Druckreduzierungseinrichtung modulartig an dem Träger angeordnet. Insbesondere kann dabei die Druckreduzierungseinrichtung selbst als Modul gegenüber der Verteileinrichtung ausgebildet sein und so selbst modular aufgebaut und in variabler Ausführung bestückt werden.

Vorteilhaft ist wenigstens eine Druckreduzierungseinrichtung kombiniert aufgebaut und kann beispielsweise drei verschiedene Drücke erzeugen, z. B. einen Arbeitsdruck (P2) von circa 40 bar, eine Steuerluft von z.B. 10 bar und einen Druck für eine Blasdüsenfeder von z.B. 6 bar Auf diese Weise wird zusätzlich Bauraum gespart und die Zugänglichkeit bleibt gleichwohl im Montagefall erhalten. Vorteilhaft weisen die einzelnen Umformungsstationen jeweils Ventilblöcke mit einer Vielzahl von Ventilen auf, welche die Zufuhr des Luftdrucks an die jeweilige Beaufschlagungseinrichtung steuern. Bei diesen Ventilen handelt es sich vorteilhaft um pneumatische vorgesteuerte Ventile, die bevorzugt von dem besagten Steuerdruck versorgt werden.

Bei Servicearbeiten, z. B. einem Austausch von Druckreduzierungseinrichtungen, einer Verteileinrichtung oder anderer Komponenten, können die Flanschverbindungen bzw. die Steckverbindungen leicht gelöst werden und so die jeweilige Komponente der Aufbereitungseinheit mit geringem Werkzeugeinsatz entnommen bzw. hinzugefügt werden. Auf diese Weise können auch im Inneren der Konsole oder auch eines Blaskarussells Servicearbeiten unter einfacheren Bedingungen durchgeführt werden.

Bei einer weiteren vorteilhaften Ausführungsform weist die Vorrichtung wenigstens eine Druckregelungseinrichtung auf, die in Strömungsverbindung mit der Druckreduzierungseinrichtung steht. Vorteilhaft weist die Vorrichtung wenigstens zwei Druckregelungseinrichtungen auf, die in Strömungsverbindung mit der Druckreduzierungseinrichtung steht. Auf diese Weise können den Kunststoffbehältnissen unterschiedliche Drücke zur Verfügung gestellt werden, wie beispielsweise Vorblasdrücke, Zwischenblasdrücke, Fertigblasdrücke und dergleichen. Zu diesem Zweck weisen die einzelnen Umformungsstationen vorteilhaft einen Ventilblock bzw. eine Vielzahl von Ventilen auf, um den Kunststoffvorformlingen die Druckniveaus zuzuführen.

Bei einer weiteren vorteilhaften Ausführungsform werden vorhandene Schlauchleitungen vorteilhaft in Lebensmittelqualitätsausführung bzw. mit FDA-Zulassung (z. B. als PTFE-Wellschlauch mit Niro-Geflecht oder Metallwellrohr mit Niro-Geflecht) ausgeführt. Vorteilhaft weist die Vorrichtung auch Elektrokomponenten auf, wobei diese benötigten Elektrokomponenten für die Steuerung der Umformungsstationen auf der oben erwähnten Einheit integriert werden. Diese Elektrokomponenten können dabei beispielsweise in Umfangsrichtung des Trägers zwischen zwei Druckreduzierungseinrichtungen angeordnet sein.

Die hier beschriebene Aufbereitungseinheit kann damit modular aufgebaut werden und in Maschinenausprägungen unterschiedlicher Größe, Teilung und Funktion als Kernbaugruppe der Luftversorgung der einzelnen Umformungsstationen eingesetzt werden. Durch die modulare Bauweise mit weniger Baugruppenvarianten wird ein vereinfachter Aufbau ermöglicht.

Die erfindungsgemäße Aufbereitungseinheit kann auch auf bereits bestehenden Maschinen nachgerüstet werden.

Vorteilhaft weist die Umformungseinrichtung an den jeweiligen Umformungsstationen jeweils Reckstangen auf, welche die Kunststoffvorformlinge in ihrer Längsrichtung dehnen. Damit handelt es sich vorteilhaft bei der Umformungseinrichtung um eine Streckblasmaschine.

Bei einer weiteren Vorteilhaften Ausführungsform stehen wenigstens zwei Elemente der Vorrichtung über eine Schlauchverbindung, insbesondere eine PTFE (Polytetrafluorethylen) - Schlauchverbindung in Strömungsverbindung miteinander. Vorteilhaft ist eine Vielzahl derartiger Schlauchverbindungen zum Verbinden von Elementen insbesondere von Luftdruckausgebenden und/oder Luftdruckannehmenden Elementen vorgesehen.

So können beispielsweise die Druckreduzierungseinrichtungen über derartige Schlauchverbindungen mit weiteren Elementen der Vorrichtung in Strömungsverbindung stehen. Vorteilhaft handelt es sich zumindest bei solchen Verbindungsleitungen, die mit der Blasluft in Berührung kommen um Schlauchverbindungen. Die Verwendung der besagten Schlauchverbindungen und insbesondere die Verwendung von PTFE - Schlauchverbindungen ist Vorteilhaft bei der Anwendung von Wasserstoffperoxid und auch bei der Außendesinfektion.

Bei einer weiteren vorteilhaften Ausführungsform weist die Schlauchverbindung einen Wellschlauch und insbesondere einen Metallwellschlauch auf. Vorteilhaft ist dieser Metallwellschlauch aus Edelstahl hergestellt.

Im Stand der Technik bestehen derartige Schlauchleitungen aus Hochdruckschläuchen, die mit DIN 24°-Anschlussarmaturen verpresst werden. Die Seele und Decke der Hochdruckschläuche bestehen aus synthetischem Gummi (NBR), als Druckträger kommt ein Drahtgeflecht zum Einsatz. Diese Art der Schlauchleitung wird vor allem für Hochdruck-Hydraulik-Anwendungen eingesetzt.

Nachteil dieser Schlauchleitungs-Ausführung ist, dass sie nicht den hygienischen Anforderungen der Lebensmittelindustrie entspricht. Zum einen können sich Gummi-Partikel des Schlauchs lösen und in das Produkt gelangen. Zum anderen entstehen durch das Verpressen zwischen dem Schlauch und den Anschlussarmaturen Spalten, in denen sich Mikroorganismen vermehren und die Blasluft kontaminieren können. Zudem erfüllen die DIN 24° Anschlüsse nicht die Anforderungen einer aseptischen spaltfreien Abdichtung.

Durch den oben beschrieben Schlauch wird eine durchgängige lebensmitteltaugliche Ausführung des Blasluftstrangs im drehenden Maschinenteil der Streckblasmaschine ermöglicht. Die Abdichtung aller Blasluft führenden Komponenten erfolgt vorteilhaft spaltfrei. Zur Leitung der Blasluft zwischen Reduziereinheiten und Ringkanälen sowie zwischen Ringkanälen und Blasstationen werden besonders bevorzugt lebensmitteltaugliche Schlauchleitungen eingesetzt.

Die oben beschriebenen Metallwellschläuche bestehen besonders bevorzugt aus medienführenden Metallwellrohren und einer Drahtumflechtung zur Aufnahme von druckbedingten Axialkräften. Die Anschlussarmaturen besitzen besonders bevorzugt eine aseptische spaltfreie Dichtung, insbesondere O-Ring-Abdichtung und werden besonders bevorzugt mit dem Metallwellschlauch durch eine (insbesondere spalt- und gratfreie) Schweißnaht verbunden, wobei diese Verbindung besonders vorteilhaft stoffschlüssig erfolgt. Vorzugsweise ist das Wellrohr nahtlos ausgeführt, d.h. das verwendete Ausgangsrohr wurde gezogen. Weiterhin kann das Wellrohr auch eine spaltfreie Stumpfnaht besitzen.

Vorzugsweise besitzt das Wellrohr eine weite Wellung mit einem Wellenprofil mit dem Verhältnis Breite/Höhe >= 1:1, bevorzugt größer als 1,5:1. Dadurch können beim Betrieb aus dem Wellenprofil Rückstände durch einfache Verwirbelungen des Betriebsmediums herausgespült werden.

Die Metallwellschlauchleitungen besitzen vorzugsweise eine Temperaturstabilität von -200 °C bis 550 °C sowie eine hohe Medienbeständigkeit gegen flüssige und gasförmige Stoffe. Damit ist vorzugsweise eine durchgängige oder teilweise Wärmeisolierung der Metallwellschläuche und der Ringkanäle durch Isolierschläuche vorgesehen. Weiterhin können Metallwellschläuche und die Ringkanäle aktiv durch Heizwendeln temperiert werden.

Die Anmelderin behält sich vor, separat Schutz zu beanspruchen für eine derartige Schlauchverbindung und insbesondere deren Verwendung für Blasformmaschinen.

Eine entsprechende Schlauchverbindung weist ein als Medienleitung dienendes Wellrohr bzw. einen Wellrohrschlauch auf, welches aus einem Metall gebildet ist. Weiterhin ist dieses Wellrohr vollumfänglich von einer Ummantelung umgeben, wobei diese Ummantelung vorteilhaft aus einem Metallgeflecht besteht.

Vorteilhaft ist dieser Wellrohrschlauch aus nahtlosen Wellrohren ausgeführt oder mit durch eine Stumpfnaht geschweißten Wellrohren. Bevorzugt ist das Wellrohr beständig gegen flüssiges und/oder gasförmiges Sterilisationsmittel und insbesondere flüssiges oder gasförmiges H₂O₂. Vorteilhaft weist die Schlauchverbindung weiterhin eine Anschlussarmatur auf, welche bevorzugt ebenfalls rohrförmig ausgebildet ist und an der vorteilhaft der Wellrohrschlauch durch eine Schweissverbindung und insbesondere eine nahtlose Schweissverbindung angeordnet ist.

Vorteilhaft ist wenigstens abschnittsweise zusätzlich zu der Ummantelung noch ein weiterer Stützkörper vorgesehen, der das Wellrohr umgibt und der insbesondere radial außerhalb der Ummantelung angeordnet ist. Durch diesen Stützkörper wird insbesondere auch die Schweißnahtverbindung geschützt. Vorteilhaft ist mittels der Schweißnaht das Wellrohr mit der Anschlussarmatur verbunden und besonders bevorzugt ist mittels dieser Schweißnaht auch der erwähnte Stützkörper mit der Anschlussarmatur und/oder dem Wellrohr verbunden. Vorteilhaft ist auch die Ummantelung mittels der Schweißnaht an der Anschlussarmatur angeordnet.

Bei einer weiteren vorteilhaften Ausführungsform ist eine Wärmeisolierung für die Ringkanäle und/oder die oben beschriebenen Metallrohrschläuche vorgesehen. Dabei ist es weiterhin möglich, dass eine aktive Temperierung der Ringkanäle und/oder der (Metall)rohrschläuche vorgenommen wird. Diese aktive Temperierung kann dabei mittels Heizwendeln erfolgen. Es wäre jedoch auch eine andere Art der Temperierung denkbar, etwa mittels einer Heizflüssigkeit oder einer induktiven Erwärmung.

Durch die hier beschriebene Vorgehensweise kann eine durchgängige lebensmitteltaugliche Ausführung des Blasluftstrangs im drehenden Maschinenteil zur Verfügung gestellt werden. Bevorzugt erfolgt, wie oben erwähnt, auch eine spaltfreie Anbindung der Schlauchleitung an ihre jeweilige Armatur, insbesondere mittels einer Schweißverbindung. Auf diese Weise wird bevorzugt auch eine aseptische Abdichtung zu dem Anschlussteil ermöglicht, wobei besonders bevorzugt auch eine Medien- und Temperaturbeständigkeit gewährleistet ist.

Die vorliegende Erfindung ist weiterhin auf eine Aufbereitungseinrichtung zum Verteilen eines gasförmigen Mediums auf Umformungsstationen zum Beaufschlagen von Kunststoffvorformlingen mit einem gasförmigen Medium gerichtet. Dabei ist eine wenigstens teilweise drehbar angeordnete Verteileinrichtung vorgesehen, welche ein gasförmiges Medium auf die einzelnen Umformungsstationen verteilt, sowie eine Vielzahl von Reduzierungseinrichtungen, welche den Druck des von der Verteileinrichtung zur Verfügung gestellten gasförmigen Mediums reduzieren, wobei jede dieser Druckreduzierungseinrichtungen über eine Verbindungsleitung mit der Verteileinrichtung zur Leitung des gasförmigen Mediums in Strömungsverbindung steht. Erfindungsgemäß sind die einzelnen Druckreduzierungseinrichtungen in Umfangsrichtung um die Verteileinrichtung und benachbart zu der Verteileinrichtung angeordnet.

Die Umfangsrichtung entspricht bevorzugt auch der Drehrichtung des Trägers und wird besonders bevorzugt durch eine geometrische Drehachse bestimmt, um die sich der Träger aber auch die Anordnung zum Verteilen des gasförmigen Mediums dreht. Diese Anordnung zum Verteilen des gasförmigen Mediums wird im Folgenden auch als Aufbreitungseinrichtung bezeichnet.

Vorteilhaft sind die Verbindungsleitungen kürzer als 40 cm, bevorzugt kürzer als 30 cm, bevorzugt kürzer als 20 cm und besonders bevorzugt kürzer als 10 cm. Vorteilhaft sind die Druckreduzierungseinrichtungen sternförmig um die Verteileinrichtung angeordnet. Bei der Verteileinrichtung handelt es sich vorteilhaft um einen Drehverteiler, der besonders bevorzugt die Blasluft von wenigstens einem stehenden Teil auf wenigstens ein drehendes Teil überträgt.

Vorteilhaft weist der Drehverteiler mehrere drehend angeordnete Ausgänge für das gasförmige Medium und bevorzugt Druckausgänge auf. Vorteilhaft sind auch diese Ausgänge in der Umfangsrichtung des Drehverteilers versetzt zueinander angeordnet. Vorteilhaft sind die Druckreduzierungseinrichtungen derart auf dem Träger angeordnet, dass ihre Druckeingänge den besagten Druckausgängen der Verteileinrichtung unmittelbar gegenüberliegen, so dass diese Druckausgänge mit den Druckeingängen der Druckreduzierungseinrichtungen auf kürzestem geometrischen Weg verbunden werden können. Vorteilhaft sind die Druckausgänge der Verteileinrichtung und die Druckeingänge der einzelnen Druckreduzierungseinrichtungen höhengleich angeordnet.

Dabei können bei einer weiteren vorteilhaften Ausführungsform diese oben erwähnten Verbindungsleitungen durch Flanschverbindungen ausgebildet sein. Vorteilhaft ist wenigstens eine und besonders bevorzugt sind wenigstens zwei Druckreduzierungseinrichtungen geeignet, um wenigstens zwei unterschiedliche Druckniveaus zur Verfügung zu stellen.

Weitere Vorteile und Ausführungsformen ergeben sich aus den beigefügten Figuren:
Darin zeigen:
   - Fig. 1: eine Anordnung zum Expandieren von Kunststoffvorformlingen zu Kunststoffbehältnissen;
   - Fig. 2: die Luftverteilanordnung einer erfindungsgemäßen Vorrichtung zum Umformen von Kunststoffvorformlingen zu Kunststoffbehältnissen;
   - Fig. 3: eine Seitenansicht der in Figur 2 gezeigten Anordnung;
   - Fig. 4: eine Draufsicht auf die in Figur 2 gezeigte Anordnung;
   - Fig. 5: eine weitere Ansicht der in Figur 2 gezeigten Vorrichtung mit einem Träger;
   - Fig. 6: eine Dreifach-Druckreduzierungseinrichtung;
   - Fig. 7: eine weitere Ansicht der in Figur 6 gezeigten Dreifach-Druckreduzierungseinrichtung;
   - Fig. 8: eine Ansicht einer Druckreduzierungseinrichtung;
   - Fig. 9: eine weitere Ansicht der in Figur 8 gezeigten Druckreduzierungseinrichtung;
   - Fig. 10: eine Ansicht einer erfindungsgemäßen Aufbereitungseinrichtung;
   - Fig. 11.: Eine weitere Ansicht einer erfindungsgemäßen Aufbereitungseinrichtung bei Anwendung auf eine weitere Maschinengröße;
   - Fig. 12: eine Darstellung einer Schlauchverbindung für eine erfindungsgemäße Vorrichtung; und
   - Fig. 13: eine Detaildarstellung der in Fig. 12 gezeigten Schlauchverbindung.

Figur 1 zeigt eine Anordnung 45 zum Expandieren von Kunststoffvorformlingen 10 zu Kunststoffbehältnissen 20. Der Anordnung 45 kann dabei eine Erwärmungseinrichtung vorgeschaltet sein, welche die Kunststoffvorformlinge 10 erwärmt. Anschließend werden die Kunststoffvorformlinge 10 über ein Zuführrad 42 an eine Vorrichtung 1 zum Umformen der Kunststoffvorformlinge 10 zu den Kunststoffbehältnissen 20 übergeben. Diese Vorrichtung 1 weist dabei eine Vielzahl von Umformungsstationen 8 auf, welche an einem in seiner Gesamtheit mit 2 bezeichneten drehbaren Träger angeordnet sind. Das Bezugszeichen 44 kennzeichnet ein Abführrad, welches die gefertigten Kunststoffbehältnisse 20 abführt.

Jede einzelne dieser Umformungsstationen 8 weist dabei eine nur schematisch dargestellte Druckbeaufschlagungseinrichtung, wie etwa eine Blasdüse 12, auf, welche die Kunststoffvorformlinge 10 mit der Druckluft beaufschlagt, um diese zu expandieren. Das Bezugszeichen 14 kennzeichnet ebenfalls grob schematisch eine Bevorratungseinrichtung für das gasförmige Medium, d.h. für die Druckluft. Diese Bevorratungseinrichtung 14, bei der es sich beispielsweise um einen Kompressor, aber auch eine andere Art eines Druckluftreservoirs handeln kann, ist hier stationär angeordnet und von dieser Bevorratungseinrichtung 14 wird die Druckluft über einen Drehverteiler 40 auf die einzelnen Umformungsstationen 8 geführt. Das Bezugszeichen 50 kennzeichnet in der Gesamtheit eine Luftaufarbeitungseinrichtung, welche hier mit den einzelnen Umformungsstationen 8 mitdreht und auch an dem Träger 2 angeordnet ist.

Figur 2 zeigt die (Druck-)Aufbereitungseinrichtung, welche ebenfalls an dem hier nur teilweise dargestellten Träger 2 angeordnet ist. Man erkennt hier wiederum die in der Gesamtheit mit 40 bezeichnete Verteileinrichtung, welche die Druckluft auf den sich drehenden Träger 2 verteilt. Bei dieser Anordnung sind insgesamt drei einfache Druckreduzierungseinrichtungen 52, 56 und 58 vorgesehen, welche über eine Verbindungsleitung mit der Verteileinrichtung 40 verbunden sind, und welche jeweils unterschiedliche Drücke ausgeben.

Eine weitere Dreifach-Druckreduzierungseinrichtung 60 ist ebenfalls über eine Verbindungsleitung 54 mit der Verteileinrichtung 40 verbunden. Diese Verbindungsleitung 54 ist hier, wie oben erwähnt, sehr kurz gehalten und insbesondere als starre Verbindung ausgelegt.

Das Bezugszeichen 86 bezieht sich jeweils auf eine Elektroeinheit, die ebenfalls auf dem Träger 2, hier zwischen den Druckreduzierungseinrichtungen 52, 56, 58, angeordnet ist. Das Bezugszeichen 84 kennzeichnet einen weiteren Träger, über den die Druckreduzierungseinrichtungen 52, 56 und 58 an dem Träger 2 angeordnet sind.

Durch die Anordnungen der einzelnen Druckreduzierungseinrichtungen 52, 56, 58 und 60 um den Drehverteiler 40 sind diese direkt mit dem Drehverteiler 40 verbunden und stehen damit auch jeweils direkt mit diesem in Strömungsverbindung.

Genauer sind hier die einzelnen Druckreduzierungseinrichtungen 52, 56, 58 und 60 direkt an dem Drehverteiler 40 angeflanscht, wie in Figur 2 erkennbar. Das Bezugszeichen U kennzeichnet die Umfangsrichtung, in der die einzelnen Druckreduzierungseinrichtungen 52, 56, 58 und 60 hintereinander angeordnet sind.

Eine derartige Aufbereitungseinheit dient für Blasmaschinen, insbesondere Blasmaschinen, welche wenigstens zwischen 8 und 28, beziehungsweise auch zwischen 8 und 36 Umformungsstationen 8 aufweist.

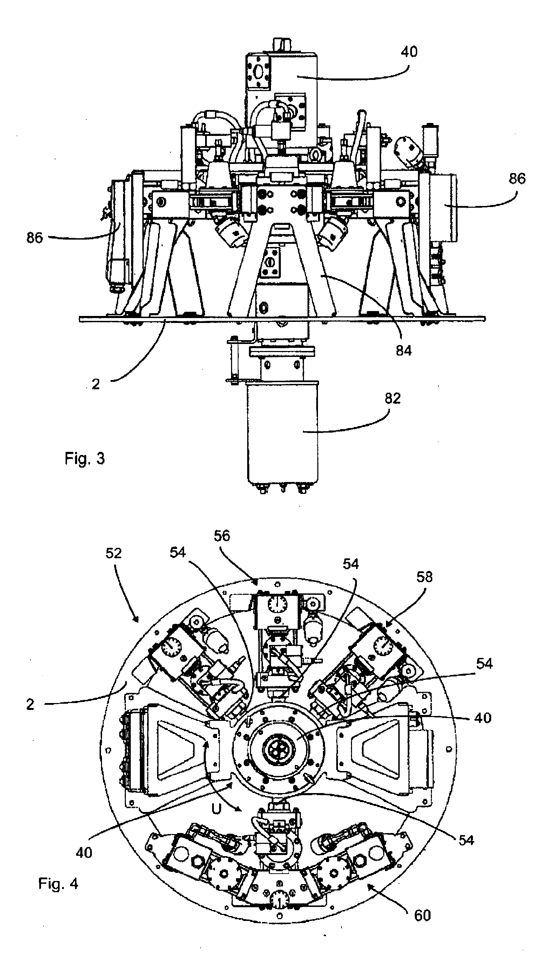

Figur 3 zeigt eine Seitenansicht der in Figur 2 gezeigten Darstellung. Man erkennt hier auch einen Schleifringüberträger 82, der insbesondere auch für die elektrische Verbindung der einzelnen Komponenten an einen stehenden Stromanschluss dient. Auch erkennt man wiederum einen Teil des Drehverteilers 40.

Figur 4 zeigt eine Draufsicht auf die in Figur 2 gezeigte Vorrichtung. Bei dieser Darstellung erkennt man insbesondere die einzelnen Verbindungsleitungen 54 bzw. Flanschverbindungen 54, über die die Druckreduzierungseinrichtungen 52, 56, 58 und 60 an den Drehverteiler 40 angeschlossen sind. Die Druckreduzierungseinrichtung 52 dient hier zum Zur-Verfügung-Stellen eines Arbeitsdruckes 2, die Druckreduzierungseinrichtung 56 dient zum Zur-Verfügung-Stellen eines Arbeitsdruckes 3 und die Druckreduzierungseinrichtung 58 dient zum Zur-Verfügung-Stellen eines Arbeitsdruckes 4. Die Druckniveaus dieser Arbeitsdrücke sind dabei individuell einstellbar.

Die Dreifach-Druckreduzierungseinrichtung 60 dient zur Zurverfügungstellung eines Arbeitsdruckes 1, einer Steuerluft, sowie auch eines Drucks für die Blasdüsenvorspannung. Auch die Druckniveaus dieser Drücke sind dabei veränderbar.

Figur 5 zeigt eine Ausgestaltung der Erfindung für eine vergleichsweise große Umformungseinrichtung. Das Bezugszeichen 92 kennzeichnet dabei Befestigungsstellen, an denen die einzelnen Umformungsstationen 8 (nicht gezeigt) angeordnet werden können. Genauer gesagt ist hier ein Stationsträger 80 über eine Vielzahl von Stegen 81 an dem Träger 2 angeordnet, so dass auf diese Weise auch die (nicht gezeigten) Umformungsstationen an diesem Träger 2 angeordnet sind.

Figur 6 zeigt eine Darstellung der Dreifach-Druckreduzierungseinrichtung 60. Man erkennt hier zunächst wieder die Verbindungsleitung 54, über welche die Dreifach-Druckreduzierungseinrichtung 60 an der Verteileinrichtung 40 angeordnet werden kann. Das Bezugszeichen 54a kennzeichnet einen Flanschanschluss zum Anschließen der Verbindungsleitung 54 an die Verteileinrichtung 40. Das Bezugszeichen 64 kennzeichnet einen Druckregler für die Stufe 1 (hier für den Steuerdruck) und das Bezugszeichen 66 einen Druckregler für die Stufe 2 (hier für die Blasdüsenvorspannung). Das Bezugszeichen 62 kennzeichnet einen Proportionaldruckregler für die Stufe 1 des Arbeitsdruckes. Dieser Proportionaldruckregler 62 wird für einen der verschiedenen Blasdrücke verwendet, um das Druckniveau im Betrieb zu regeln. Daneben können diese Einstellungen des Blasdruckes in Abhängigkeit beispielsweise von verschiedenen Flaschengrößen (Ausstattungen) von einer Maschinensteuerung gesteuert werden. Die Druckregler 64 und 66 sind manuell einstellbar, um auf diese Weise die Steuerluft und die Blasdüsenvorspannung steuern zu können. Im Regelfall werden diese Druckniveaus fest eingestellt. Damit stellt sich die Dreifach-Druckreduzierungseinrichtung 60 als eine Kombination aus einem pneumatisch vorgesteuertem Druckregler mit Proportionaldruckregler 62 und den zwei manuell einstellbaren Druckreglern 64 und 66 dar.

Das Bezugszeichen 68 kennzeichnet eine Schlauchverbindung zum Anschließen des Proportionaldruckreglers 62. Hierbei kann es sich insbesondere um einen PTFE - Schlauch handeln. Neben der gezeigten Schlauchverbindung können noch weitere derartige Schlauchverbindungen vorgesehen sein.

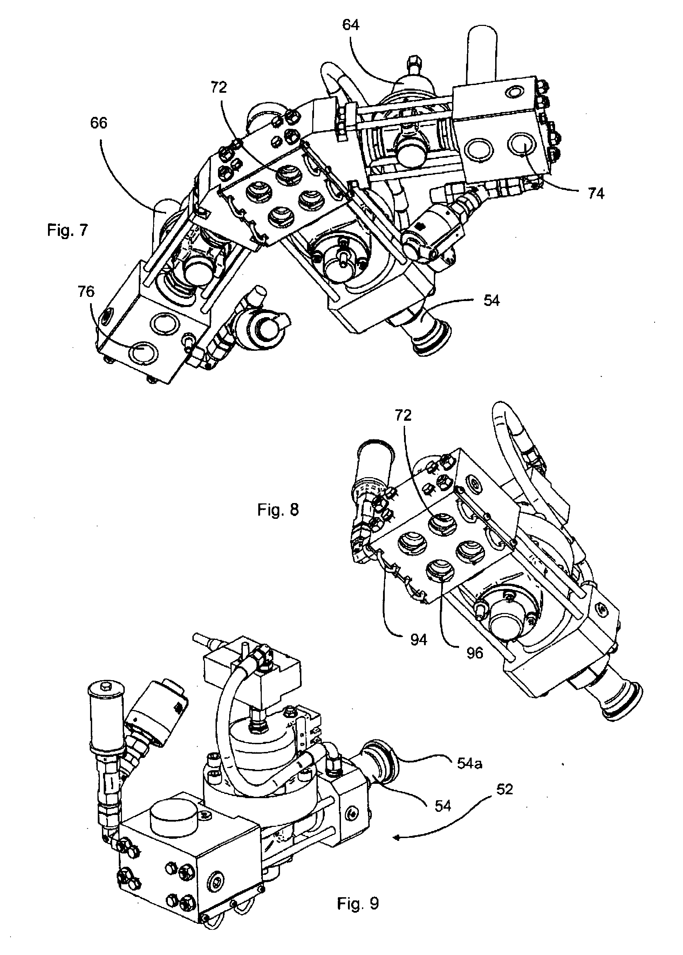

Figur 7 zeigt eine Darstellung von unten der in Figur 6 gezeigten Dreifach-Druckreduzierungseinrichtung 60. Man erkennt hier insbesondere auch die Ausgänge 72 für den Arbeitsdruck 1, die Ausgänge 74 für die Steuerluft und die Ausgänge 76 für die Blasdüsenvorspannung.

Figur 8 zeigt eine Darstellung einer Einfach-Druckreduzierungseinrichtung 52. Auch hier erkennt man wiederum die Verbindungsleitung 54, sowie hier auch die Ausgänge 78, über welche beispielsweise hier der Arbeitsdruck 2 abgegeben werden kann. An die Ausgänge 78 können Steckanschlüsse (nicht gezeigt) zugeführt werden, um die einzelnen Verbindungsleitungen anzuschließen. Das Bezugszeichen 94 kennzeichnet eine Klemmeinrichtung, über welche die jeweiligen Steckverbindungen gesichert werden können. Auf diese Weise kann die gesamte Einheit 52 durch Lösen der Verbindung 54 und der hier erwähnten Steckverbindungen abgetrennt und beispielsweise zu Wartungszwecken modular entfernt werden.

Auch diese einzelnen Druckreduzierungseinrichtungen 52 weisen dabei Proportionalregler 62 beispielsweise für 40 bar auf. Auch eine Ausprägung mit manuellen Druckreglern ist denkbar.

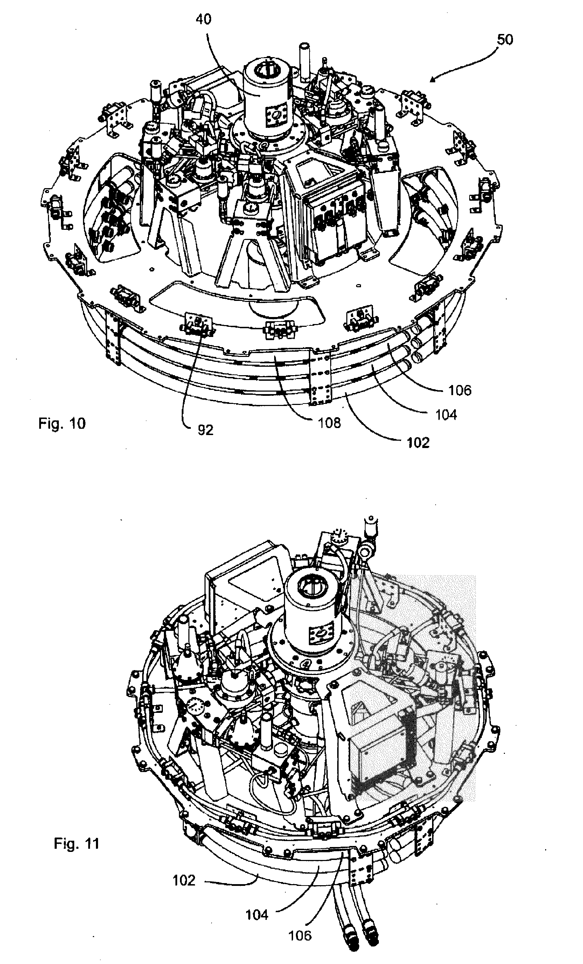

Die Figuren 10 und 11 zeigen zwei weitere Darstellungen der Aufbereitungseinheit, die jeweils für unterschiedliche Maschinengrößen dient. Man erkennt, dass sich diese Einheiten insbesondere hinsichtlich des Umbaus um die Druckaufbereitungseinrichtung 50 unterscheiden. Bei der in Figur 10 gezeigten Darstellung erkennt man auch die Ringleitungen 102, 104, 106 und 108, die jeweils mit den Druckreduzierungseinrichtungen 52, 56, 58 und 60 in Strömungsverbindung stehen. Für jede dieser Ringleitungen 102, 104, 106 und 108 können je nach Luftbedarf verschiedene Größen mit relevantem Luftdurchsatz dieser Druckreduzierungseinrichtungen 52, 56, 58 und 60 bestückt werden.

Dabei können je nach Bedarf zwischen den einzelnen Ringleitungen 102, 104, 106 und 108 und den Druckreduzierungseinrichtungen 52, 56, 58 und 60 eine bis vier Verbindungsleitungen bestehen. Ausgehend von den einzelnen Ringleitungen 102, 104, 106 und 108 werden die verschiedenen Druckniveaus bereitgestellt und an die einzelnen Umformungsstationen 8 verteilt. Diese Verteilung an die Umformungsstationen 8 ist hier nicht im Detail dargestellt. Man erkennt, dass die Luftaufbereitungseinheit 50 auf diese Weise für unterschiedliche Maschinengrößen Anwendung finden kann und jeweils nur die Größe des Trägers 2, an dem die Umformungsstationen 8 angeordnet sind, verändert wird.

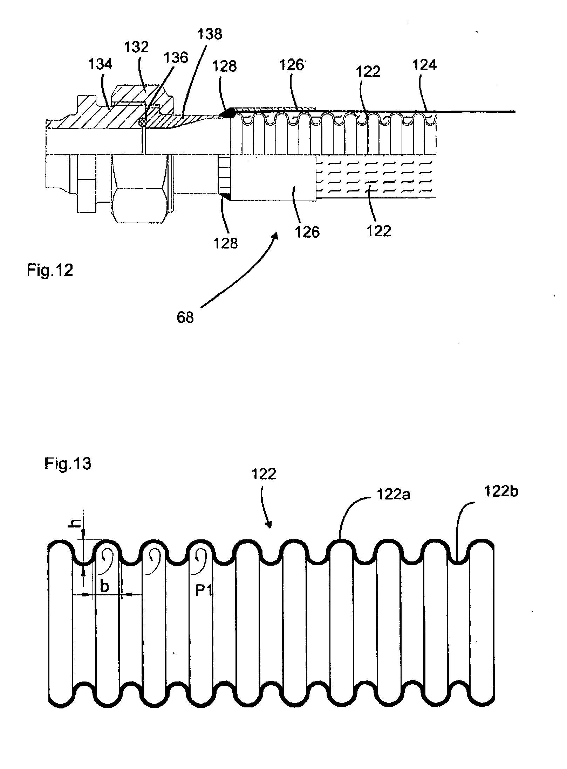

Fig. 12 zeigt eine Schlauchverbindung 68, welche in Verbindung mit einer erfindungsgemäßen Vorrichtung eingesetzt werden kann. Die Schlauchverbindung ist dabei bevorzugt flexibel und weist ein aus einem Edelstahl hergestelltes Wellrohr 122 auf. Das Bezugszeichen 124 kennzeichnet eine Ummantelung, welche das Wellrohr 122 umgibt. Diese Ummantelung 124 kann dabei aus einem Stahlgeflecht bestehen, um so auch wirksam durch hohe Drücke hervorgerufene radiale Kräfte aufnehmen zu können. Diese Ummantelung ist wiederum in einem Teilabschnitt der Schlauchverbindung von einem Stützkörper 126 umgeben.

Das Bezugszeichen 128 kennzeichnet eine Schweißnaht bzw. Schweißverbindung, welche zum Fixieren des Wellrohres 122 an einem Anschlussstück 138 dient. Diese Schweißverbindung verbindet dabei das Anschlussstück 138 mit dem Wellrohr 122, andererseits aber werden durch diese Schweißverbindung 128 auch die Ummantelung 124 und der Stützkörper 126 bzw. das Stützrohr 126 an dem Anschlussstück 138 befestigt. Das Anschlussstück wird bei der in Fig. 12 gezeigten Ausführungsform mittels einer umlaufenden Dichtungseinrichtung wie einem O-Ring 136 an einem Anschlussrohr 134 befestigt. Die Arretierung erfolgt hier mittels einer Überwurfmutter 132. Es wäre jedoch auch eine Befestigung etwa mittels einer Flanschverbindung, einer Klammerverbindung oder dergleichen denkbar.

Bei einer weiteren vorteilhaften Ausführungsform ist die Verbindung zwischen dem Anschlussrohr 134 und dem Anschlussstück 138 eine aseptische Verbindung. Auch die übrigen Übergänge bzw. Verbindungen können bevorzugt als aseptische Verbindungen ausgeführt sein. Bevorzugt kann die Verbindung zwischen dem Anschlussrohr 134 und dem Anschlussstück auch zur Erreichung einer Keimfreiheit gereinigt werden.

Fig. 13 zeigt eine Detaildarstellung des Wellrohres 122. Man erkennt hier auch die einzelnen radial nach außen gerichteten Wellen 122a sowie die nach innen gerichteten Wellen 122b. Die Breite b der nach außen gerichteten Wellen 122a verhält sich zu der Höhe h der Wellen wie 1:1, und ist bevorzugt größer oder gleich 1:1. Durch diese Ausgestaltung können, wie durch den Pfeil P1 veranschaulicht, aus dem Wellenprofil Rückstände durch einfache Verwirbelungen des Betriebsmediums, z.B. der Blasluft, herausgespült werden.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Vorrichtung
- 2: Träger
- 8: Umformungsstation
- 10: Kunststoffvorformling
- 12: Beaufschlagungseinrichtung, Blasdüse
- 14: Bevorratungseinrichtung
- 20: Kunststoffbehältnisse
- 40: Verteileinrichtung
- 42: Zuführrad
- 44: Abführrad
- 45: Anordnung zum Expandieren von Kunststoffbehältnissen
- 50: Luftaufbereitungseinrichtung
- 52, 56, 58: Druckreduzierungseinrichtung
- 54: (starre) Verbindungsleitung
- 54a: Flanschanschluss
- 60: Dreifach - Druckreduzierungseinrichtung
- 62: Proportionaldruckregler
- 64,66: Druckregler
- 68: Schlauchverbindung
- 72: (Druck-)Ausgänge für Arbeitsdruck
- 74, 76: (Druck-)Ausgänge für Steuerdruck
- 78: (Druck-)Ausgänge
- 80: Stationsträger
- 81: Stege
- 82: Schleifringüberträger
- 84: Träger
- 86: Elektroeinheit
- 92: Befestigungsstelle
- 94: Klemmeinrichtung
- 102, 104 106, 108: Ringleitung
- 122: Wellrohr
- 122a, 122b: Wellen
- 124: Ummantelung
- 126: Stützrohr
- 128: Verbindung, Schweißnaht
- 132: Überwurfmutter
- 134: Anschlussrohr
- 136: Dichtungseinrichtung
- 138: Anschlussstück
- U: Umfangsrichtung
- P1: Pfeil
- b: Breite
- h: Höhe

## Patentansprüche

1. Vorrichtung (1) zum Umformen von Kunststoffvorformlingen (10) zu Kunststoffbehältnissen (20) mit einem drehbaren Träger (2), an dem eine Vielzahl von Umformungsstationen (8) zum Umformen der Kunststoffvorformlinge (10) zu den Kunststoffbehältnissen (20) angeordnet ist, wobei jede Umformungsstation (8) eine Druckbeaufschlagungseinrichtung (12) aufweist, um die Kunststoffvorformlinge (10) durch Beaufschlagung mit einem gasförmigen Medium in die Kunststoffbehältnisse (20) umzuformen, mit einer insbesondere stationär angeordneten Bevorratungseinrichtung (14) zum Bevorraten des gasförmigen Mediums und einer zumindest teilweise an dem Träger (2) angeordneten Verteileinrichtung (40), welche das gasförmige Medium auf die einzelnen Umformungsstationen (8) verteilt und mit einer Aufbereitungseinrichtung (50), welche eine Beaufschlagung der Kunststoffvorformlinge (10) mit wenigstens zwei unterschiedlichen Druckniveaus ermöglicht, wobei diese Aufbereitungseinrichtung (50) wenigstens eine Druckreduzierungseinrichtung (52, 56, 58, 60) zur Reduzierung des von der Verteileinrichtung (40) zur Verfügung gestellten Drucks des gasförmigen Mediums aufweist, wobei diese Druckreduzierungseinrichtung (52, 56, 58, 60) über eine Verbindungsleitung (54) zur Leitung des gasförmigen Mediums zumindest mittelbar mit der Verteileinrichtung (40) in Strömungsverbindung steht,
**dadurch gekennzeichnet, dass**
wenigstens eine Druckreduzierungseinrichtung (52, 56, 58, 60) benachbart zu der Verteileinrichtung (40) angeordnet ist und dass wenigstens eine Druckreduzierungseinrichtung (60) derart ausgebildet ist, dass sie das gasförmige Medium unter wenigstens zwei unterschiedlichen Drücken zur Verfügung stellt.

2. Vorrichtung nach Anspruch 1,
**dadurch gekennzeichnet, dass**
eine Vielzahl von Druckreduzierungseinrichtungen (52, 56, 58, 60) in Umfangsrichtung U um die Verteileinrichtung (40) angeordnet ist.

3. Vorrichtung nach Anspruch 2,
**dadurch gekennzeichnet, dass**
die Druckreduzierungseinrichtungen (52, 56, 58, 60) sternförmig um die Verteileinrichtung (40) angeordnet sind.

4. Vorrichtung (1) nach wenigstens einem der vorangegangenen Ansprüche,
**dadurch gekennzeichnet, dass**
wenigstens eine Verbindungsleitung (54) eine starre Verbindungsleitung (54) ist.

5. Vorrichtung (1) nach wenigstens einem der vorangegangenen Ansprüche,
**dadurch gekennzeichnet, dass**
wenigstens eine Verbindungsleitung (54) kürzer als 40cm, bevorzugt kürzer als 30cm, bevorzugt kürzer als 20cm und besonders bevorzugt kürzer als 10cm ist.

6. Vorrichtung (1) nach wenigstens einem der vorangegangenen Ansprüche,
**dadurch gekennzeichnet, dass**
wenigstens eine Druckreduzierungseinrichtung (52, 56, 58, 60) modulartig an dem Träger (2) angeordnet ist.

7. Vorrichtung (1) nach wenigstens einem der vorangegangenen Ansprüche,
**dadurch gekennzeichnet, dass**
die Vorrichtung wenigstens eine Druckregelungseinrichtung aufweist, die in Strömungsverbindung mit der Druckreduzierungseinrichtung (52, 56, 58, 60) steht.

8. Vorrichtung (1) nach wenigstens einem der vorangegangenen Ansprüche,
**dadurch gekennzeichnet, dass**
wenigstens zwei Elemente der Vorrichtung (1) über eine Schlauchverbindung (68), insbesondere eine PTFE - Schlauchverbindung (68) in Strömungsverbindung miteinander stehen.

9. Vorrichtung (1) nach Anspruch 8,
**dadurch gekennzeichnet, dass**
die Schlauchverbindung (68) einen Wellrohrschlauch aufweist.

10. Vorrichtung (1) nach Anspruch 8,
**dadurch gekennzeichnet, dass**
die Verbindung zwischen dem Anschlussrohr (134) und dem Anschlussstück (138) eine aseptische Verbindung ist.

11. Aufbereitungseinrichtung (50) zum Beaufschlagen von Kunststoffvorformlingen (10) mit einem gasförmigen Medium,
**dadurch gekennzeichnet, dass**
sie mindestens eine Vorrichtung (1) zum Umformen von Kunststoffvorformlingen (10) zu Kunststoffbehältnissen (20) nach wenigstens einem der vorangegangenen Ansprüche aufweist.

## Claims

1. An apparatus (1) for the shaping of plastics material pre-forms (10) into plastics material containers (20) with a rotatable carrier (2) on which are arranged a plurality of shaping stations (8) for the shaping of the plastics material pre-forms (10) into the plastics material containers (20), wherein each shaping station (8) has a pressure stressing device (12) in order to shape the plastics material pre-forms (10) into the plastics material containers (20) by acting upon them with a gaseous medium, with a storage device (14), in particular arranged so as to be stationary, for the storage of the gaseous medium and a distribution device (40) which is arranged at least in part on the carrier (2) and which distributes the gaseous medium to the individual shaping stations (8), and with a processing device (50) which enables the plastics material pre-forms (10) to be acted upon at at least two different pressure levels, wherein this processing device (50) has at least one pressure reduction device (52, 56, 58, 60) for reducing the pressure of the gaseous medium made available by the distribution device (40), wherein this pressure reduction device (52, 56, 58, 60) is connected in terms of flow to the distribution device (40) at least indirectly by way of a connecting line (54) for conveying the gaseous medium, **characterized in that** at least one pressure reduction device (52, 56, 58, 60) is arranged adjacent to the distribution device (40), and at least one pressure reduction device (60) is designed in such a way that it makes the gaseous medium available at at least two different pressures.

2. An apparatus according to claim 1, **characterized in that** a plurality of pressure reduction devices (52, 56, 58, 60) are arranged around the distribution device (40) in the peripheral direction U.

3. An apparatus according to claim 2, **characterized in that** the pressure reduction devices (52, 56, 58, 60) are arranged in the shape of a star around the distribution device (40).

4. An apparatus (1) according to at least one of the preceding claims, **characterized in that** at least one connecting line (54) is a rigid connecting line (54).

5. An apparatus (1) according to at least one of the preceding claims, **characterized in that** at least one connecting line (54) is shorter than 40 cm, preferably shorter than 30 cm, preferably shorter than 20 cm and in a particular preferred manner shorter than 10 cm.

6. An apparatus (1) according to at least one of the preceding claims, **characterized in that** at least one pressure reduction device (52, 56, 58, 60) is arranged in a modular manner on the carrier (2).

7. An apparatus (1) according to at least one of the preceding claims, **characterized in that** the apparatus has at least one pressure regulation device which is connected in terms of flow to the pressure reduction device (52, 56, 58, 60).

8. An apparatus (1) according to at least one of the preceding claims, **characterized in that** at least two elements of the apparatus (1) are connected to each other in terms of flow by way of a hose connection (68), in particular a PTFE hose connection (68).

9. An apparatus (1) according to claim 8, **characterized in that** the hose connection (68) has a corrugated tube hose.

10. An apparatus (1) according to claim 8, **characterized in that** the connection between the attachment tube (134) and the attachment piece (138) is an aseptic connection.

11. A processing device (50) for acting upon plastics material pre-forms (10) with a gaseous medium, **characterized in that** it has at least one apparatus (1) for the shaping of plastics material pre-forms (10) into plastics material containers (20) according to at least one of the preceding claims.

## Revendications

1. Dispositif (1) de transformation de préformes en matière plastique (10) en récipients en matière plastique (20), avec un support rotatif (2) sur lequel est disposée une pluralité de stations de formage (8) permettant de déformer les préformes en matière plastique (10) pour obtenir les récipients en matière plastique (20), chaque station de formage (8) comportant un dispositif d'application de pression (12) pour former les préformes en matière plastique (10) par application d'un fluide gazeux de manière à obtenir les récipients en matière plastique (20), avec un dispositif de stockage (14) en particulier fixe pour le stockage du fluide gazeux et un dispositif distributeur (40) monté au moins en partie sur le support (2) et qui distribue le fluide gazeux aux différentes stations de formage (8), et avec un dispositif de traitement (50) permettant de soumettre les préformes en matière plastique (10) à au moins deux niveaux de pression différents, ledit dispositif de traitement (50) comportant au moins un dispositif réducteur de pression (52, 56, 58, 60) permettant de réduire la pression du fluide gazeux fournie par le dispositif distributeur (40), ledit dispositif réducteur de pression (52, 56, 58, 60) étant en liaison d'écoulement au moins indirecte avec le dispositif distributeur (40) par l'intermédiaire d'une conduite de raccordement (54) pour la conduction du fluide gazeux,
**caractérisée en ce qu'**
au moins un dispositif réducteur de pression (52, 56, 58, 60) est contigu au dispositif distributeur (40), et **en ce qu'**au moins un dispositif réducteur de pression (60) est réalisé de manière à rendre disponible le fluide gazeux sous au moins deux pressions différentes.

2. Dispositif selon la revendication 1, **caractérisée en ce qu'**
une pluralité de dispositifs réducteurs de pression (52, 56, 58, 60) sont disposés en direction périphérique U autour du dispositif distributeur (40).

3. Dispositif selon la revendication 2, **caractérisée en ce que**
les dispositifs réducteurs de pression (52, 56, 58, 60) sont disposés en étoile autour du dispositif distributeur (40).

4. Dispositif (1) selon au moins une des revendications précédentes, **caractérisée en ce qu'**
au moins une conduite de raccordement (54) est une conduite de raccordement (54) rigide.

5. Dispositif (1) selon au moins une des revendications précédentes, **caractérisée en ce qu'**
au moins une conduite de raccordement (54) est de longueur inférieure à 40 cm, avantageusement inférieure à 30 cm, préférentiellement inférieure à 20 cm et tout particulièrement préférentiellement inférieure à 10 cm.

6. Dispositif (1) selon au moins une des revendications précédentes, **caractérisée en ce qu'**
au moins un dispositif réducteur de pression (52, 56, 58, 60) est disposé modulairement sur le support (2).

7. Dispositif (1) selon au moins une des revendications précédentes, **caractérisée en ce que**
ladite installation comporte au moins un dispositif régulateur de pression en liaison d'écoulement avec le dispositif réducteur de pression (52, 56, 58, 60).

8. Dispositif (1) selon au moins une des revendications précédentes, **caractérisée en ce qu'**
au moins deux éléments de l'installation (1) sont en liaison d'écoulement entre eux par l'intermédiaire d'un tuyau de connexion (68), en particulier d'un tuyau de connexion en PTFE (68).

9. Dispositif (1) selon la revendication 8, **caractérisée en ce que**
le tuyau de connexion (68) est un tuyau flexible ondulé.

10. Dispositif (1) selon la revendication 8, **caractérisée en ce que**
la liaison entre le conduit de raccordement (134) et la pièce de raccord (138) est une liaison aseptique.

11. Installation de traitement (50) permettant de soumettre des préformes en matière plastique (10) à un fluide gazeux, **caractérisé en ce qu'**il comprend
au moins un dispositif (1) de transformation de préformes en matière plastique (10) en récipients en matière plastique (20) selon au moins une des revendications précédentes.
